# EUROPEAN PATENT APPLICATION

(11) **EP 2 750 330 A1**
(43) Date of publication of application: **02.07.2014**
(21) Application number: 12837663.9
(22) Date of filing: 28.05.2012
(51) Int. Cl.: H04L 12/24, H04Q 11/00

(54) **OPTICAL NETWORK TERMINAL MANAGEMENT CONTROL INTERFACE MESSAGE TRANSMISSION METHOD AND SYSTEM, AND CORRESPONDING DEVICE**

(71) Applicant: Huawei Technologies Co., Ltd., Shenzhen, Guangdong 518129 (CN)
(72) Inventor: LIANG, Xuanqin, Shenzhen City Guangdong 518129 (CN); ZHENG, Gang, Shenzhen City Guangdong 518129 (CN); LUO, Yuanqiu, Shenzhen City Guangdong 518129 (CN); WU, Wei, Shenzhen City Guangdong 518129 (CN)
(74) Representative: Epping - Hermann - Fischer
(86) International application number: PCT/CN2012/076159
(87) International publication number: WO 2013/177736

(57) **Abstract**

The present application discloses a method, a system and a related device for transmitting an OMCI message. The method includes: sending, by an optical line terminal device, configuration information to an optical network terminal device, where the configuration information is used to instruct the optical network terminal device to configure a multicast port on the local node to an enabled status so as to establish a multicast channel; and sending an OMCI message that carries multicast information to the optical network terminal device through the multicast channel, where the multicast information includes a multicast port identifier and the multicast port identifier is used to reflect a mapping between the OMCI message and the multicast port.

## Description

### FIELD OF THE INVENTION

The present application relates to optical fiber access technologies, and in particular, to a method, a system, and a device for transmitting an optical network terminal management and control interface message.

### BACKGROUND OF THE INVENTION

An access network is a network between a backbone network and a user terminal. As the bandwidth required by a user is increasing, a traditional copper wire broadband access system is faced with a bandwidth bottleneck. Meanwhile, optical fiber access technologies which feature a huge bandwidth capacity become more and more mature, and application costs are decreasing year by year, so that a fiber access network, such as a passive optical network (PON, Passive Optical Netwotk), gradually becomes a powerful competitor among the next generation broadband access networks.

A traditional PON system mainly includes an optical line terminal device (OLT, Optical Line Terminal), an optical distribution network (ODN, Optical Distribution Network), and optical network terminal devices (ONTs, Optical Network Terminals). The OLT is connected, in point-to-multipoint mode, to multiple ONTs through the ODN.

Operation, administration, and maintenance (OAM, Operations, Administation, and Maintenance) messages must be transmitted between the OLT and the ONTs to implement remote administration and maintenance on the ONTs.

Generally, a GPON (Gigabit-capable Passive Optical Network) system and an XG-PON (10-Gigabit-capable Passive Optical Network) system mainly use optical network terminal management and control interfaces (OMCI, ONT Management and Control Interface) to transmit the OAM messages. However, in an existing GPON system and an existing XG-PON system, a unicast mode is mainly used for downlink propagation of an optical network terminal management and control interface message (OMCI message for short); that is, one copy of an OMCI message can be sent to only one ONT. If an OMCI message needs to be sent to multiple ONTs, the OLT must create multiple copies of the OMCI message and separately send one copy of the OMCI message to each ONT. As the number of ONTs to which the OMCI message needs to be sent increases, downlink bandwidth resources will be seriously wasted.

### SUMMARY OF THE INVENTION

To solve the above problem, the present application provides a method, a system, and a device for transmitting an OMCI message.

In one aspect, the present application provides a method for transmitting an OMCI message, including: sending, by an optical line terminal device, configuration information to an optical network terminal device, where the configuration information is used to instruct the optical network terminal device to configure a multicast port on the local node to an enabled status according to the configuration information so as to establish a multicast channel; and sending an OMCI message that carries multicast information to the optical network unit device through the multicast channel, where the multicast information includes a multicast port identifier and the multicast port identifier is used to reflect a mapping between the OMCI message and the multicast port.

The present application further provides another method for transmitting an OMCI message, including: receiving, by an optical network terminal device, configuration information sent by an optical line terminal device; configuring a multicast port on the local node to an enabled status according to the configuration information so as to establish a multicast channel; and acquiring, from the multicast channel, an OMCI message that is sent by the optical line terminal device and carries multicast information, where the multicast information includes a multicast port identifier and the multicast port identifier is used to reflect a mapping between the OMCI message and the multicast port.

In another aspect, the present application provides an optical line terminal device, including: a sending module, adapted to send configuration information to an optical network terminal device, where the configuration information is used to instruct the optical network terminal device to configure a multicast port on the local node to an enabled status so as to establish a multicast channel; an information processing module, adapted to bear multicast information in an OMCI message, where the multicast information includes a multicast port identifier and the multicast port identifier is used to reflect a mapping between the OMCI message and the multicast port; and a multicast module, adapted to send the OMCI message including the multicast information to the optical network terminal device through the multicast channel.

The present application further provides an optical network terminal device, including: a configuration information receiving module, adapted to receive configuration information sent by an optical line terminal device; a configuring module, adapted to configure a multicast port on the local node to an enabled status according to the configuration information so as to establish a multicast channel; and an OMCI message acquiring module, adapted to acquire, from the multicast channel, an OMCI message that is sent by the optical line terminal device and carries multicast information, where the multicast information includes a multicast port identifier and the multicast port identifier is used to reflect a mapping between the OMCI message and the multicast port.

In still another aspect, the present application provides a passive optical network system, including the preceding optical line terminal device and multiple optical network terminal devices, where the optical line terminal device is connected to the multiple optical network terminal devices through an optical distribution network.

According to solutions provided in the present application, a multicast channel is established between an optical line terminal device and an optical network terminal device, and multicast information is set in an OMCI message, so that an OMCI message sent by an OLT can be received by multiple ONTs simultaneously, thereby significantly reducing a waste of downlink bandwidth resources and reducing burden of the OLT in copying the OMCI message. Further, light propagates extremely fast, and there is no time delay caused by copying the OMCI message. This improves real-time performance of the system and reduces a waste of time.

### BRIEF DESCRIPTION OF THE DRAWINGS

FIG. 1 is a schematic structural diagram of a PON system according to an embodiment of the present application;
FIG. 2 is a flowchart of a method for transmitting an OMCI message according to an embodiment of the present application;
FIG. 3 is a flowchart of a method for transmitting an OMCI message according to another embodiment of the present application;
FIG. 4 is a flowchart of a method for transmitting an OMCI message according to still another embodiment of the present application;
FIG. 5 is a schematic structural diagram of an optical line terminal device according to an embodiment of the present application;
FIG. 6 is a schematic structural diagram of an optical network terminal device according to an embodiment of the present application; and
FIG. 7 is a schematic structural diagram of an optical network terminal device according to another embodiment of the present application.

### DETAILED DESCRIPTION OF THE EMBODIMENTS

The following description, which is for description but not for limitation, provides specific details such as a specific system structure, an interface, and a technology so that the present application can be thoroughly understood. However, persons skilled in the art should understand that the present application can also be implemented in another embodiment without these details. In another case, a detailed description about a well-known apparatus, circuit, and method is omitted to prevent unnecessary details from obscuring the description about the present application.

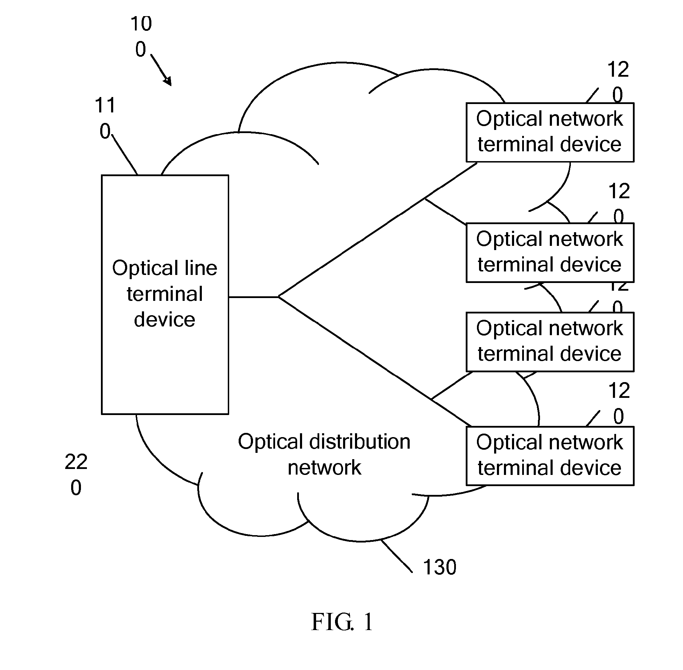

The following describes the present application in detail with reference to the accompanying drawings and embodiments. Multicast mentioned in the present application includes broadcast and multicast. Referring to FIG. 1, FIG. 1 is a schematic structural diagram of a passive optical network (PON) system to which a method for transmitting an OMCI message applies according to the present application. The passive optical network system 100 may include at least one optical line terminal (OLT) device 110, multiple optical network terminal (ONT) devices 120, and an optical distribution network (ODN) 130. The optical line terminal device 110 is connected, in point-to-multipoint mode, to the multiple optical network terminal devices 120 through the optical distribution network 130.

The direction from the optical line terminal device 110 to the optical network terminal device 120 is defined as a downlink direction, and the direction from the optical network terminal device 120 to the optical line terminal device 110 is defined as an uplink direction. In the downlink direction, the optical line terminal device 110 broadcasts a downlink data stream to all optical network terminal devices 120 in time division multiplexing (TDM, Time Division Multiplexing) mode, and each optical network terminal device 120 only receives data that carries its own identifier. In the uplink direction, because all the optical network terminal devices 120 share an optical transmission channel, the passive optical network system 100 uses a time division multiple access (TDMA, Time Division Multiple Access) mode in the uplink direction in order to avoid collision of uplink data from the optical network terminal devices 120. That is, the optical line terminal device 110 allocates a timeslot for each optical network terminal device 120, and each optical network terminal device 120 sends the uplink data strictly according to the timeslot allocated by the optical line terminal device 110.

The passive optical network system 100 may be a communications network for implementing data distribution between the optical line terminal device 110 and the optical network terminal devices 120 without using any active component. For example, in a specific embodiment, data distribution between the optical line terminal device 110 and the optical network terminal devices 120 may be implemented by using a passive optical component (such as an optical splitter) in the optical distribution network 130. Further, the passive optical network system 100 may be a GPON system defined in the ITU-T Recommendation G.984, an XG-PON standard defined in the ITU-T Recommendation G.987, or another PON system using an optical network terminal management and control interface (OMCI) channel for transmitting OAM messages. Various passive optical network systems defined in the preceding recommendations are incorporated in the present application document by reference in their entireties.

The optical line terminal device 110 is generally located in a central position (such as a central office Central Office, CO) and is capable of centrally managing the multiple optical network terminal devices 120. The optical line terminal device 110 may be used as a medium between the optical network terminal device 120 and a higher-layer network (not shown in FIG. 1) to take data received from the higher-layer network as downlink data and forward the data to the optical network terminal device 120 through the optical distribution network 130, and forward uplink data received from the optical network terminal device 120 to the higher-layer network.

The optical network terminal device 120 can be arranged on the user side (such as customer premises) in a distributed manner. The optical network terminal device 120 may be a network device that is adapted to communicate with the optical line terminal device 110 and a user terminal. Specifically, the optical network terminal device 120 may be used as a medium between the optical line terminal device 110 and the user terminal. For example, the optical network terminal device 120 may forward downlink data received from the optical line terminal device 110 to the user, and take data received from the user terminal as uplink data, and forward the uplink data to the optical line terminal device 110 through the optical distribution network 130. It should be understood that the structure of the optical network terminal device 120 is similar to that of an optical network unit (Optical Network Unit, ONU) device. Therefore, in the solutions provided in the present application document, an optical network terminal device and an optical network unit device are interchangeable.

The optical distribution network 130 may be a data distribution system. It may include an optical fiber, an optical coupler, an optical splitter, and/or other devices. In an embodiment, the optical fiber, the optical coupler, the optical splitter, and/or other devices may be passive optical components. Specifically, the optical fiber, the optical coupler, the optical splitter, and/or other devices may be components that distribute data signals between the optical line terminal device 110 and the optical network terminal devices 120 without requiring any power supply. In addition, in another embodiment, the optical distribution network 130 may further include one or more processing devices such as an optical amplifier or a relay device (Relay device). The optical distribution network 130 may specifically use a two-stage splitting mode for extension from the optical line terminal device 110 to the optical network terminal device 120, or may further be configured as any other point-to-multipoint (such as one-stage splitting or multi-stage splitting) structure.

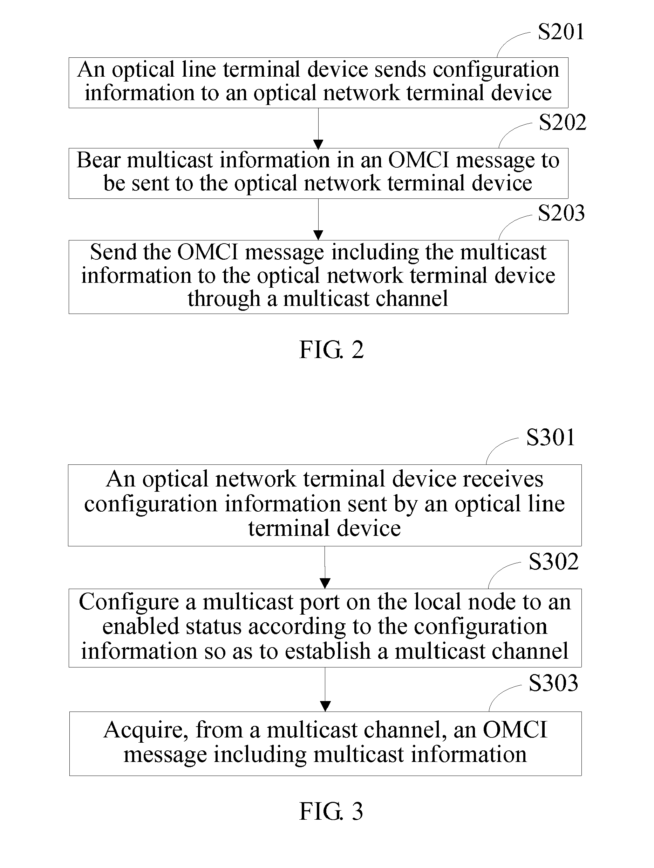

Referring to FIG. 2, FIG. 2 is a flowchart of a method for transmitting an optical network terminal management and control interface (OMCI) message according to an embodiment of the present application. The method for transmitting an OMCI message includes:
S201: An optical line terminal device sends configuration information to an optical network terminal device.

Before sending the configuration information, the optical line terminal device separately establishes a unicast channel, similar to a point-to-point channel, between it and each of its corresponding optical network terminal devices. The optical line terminal device sends the configuration information to the optical network terminal device through the unicast channel, where the configuration information sent by the optical line terminal device may be indication information that is used to instruct the optical network terminal device to configure an enabled status for a multicast port, and the optical network terminal device may configure a multicast port on the local node to an enabled status according to the configuration information so as to establish a multicast channel between the optical line terminal device and the optical network terminal device. When the configuration information received by the optical network terminal device indicates that a multicast channel needs to be established on the local node, the optical network terminal device enables the multicast port on the local node; otherwise, the multicast port on the local node is disabled.

After the optical network terminal device has configured the multicast port on the local node to the enabled status, the multicast channel is formed between the optical line terminal device and the optical network terminal device whose multicast port is enabled. Specifically, if a part of the optical network terminal devices that are connected to a PON port on the optical line terminal device enable their multicast ports, multicast channels are formed between the optical line terminal device and the optical network terminal devices that are connected to the PON port; that is, these optical network terminal devices form a multicast group; and particularly, if all optical network terminal devices that are connected to a PON port on the optical line terminal device enable their multicast ports, broadcast channels are formed between the optical line terminal device and all optical network terminal devices that are connected to the PON port.

It should be noted that a multicast channel may be used to multicast a service message and an OMCI message simultaneously or multicast an OMCI message separately, and multicast ports of the optical network terminal devices sharing a multicast channel only receive the service message and the OMCI message that have corresponding multicast port identifiers.

The optical line terminal device may further set a multicast channel so as to encrypt a downlink service message and OMCI message. For example, the optical line terminal device may generate an encryption key and send the key to a designated optical network terminal device through the unicast channel between it and the optical network terminal device, so that the optical network terminal device that obtains the key is capable of decrypting an encrypted multicast message received through the multicast channel.

S202: The optical line terminal device bears multicast information in the OMCI message to be sent to the optical network terminal device.

The optical line terminal device may set multicast information in the OMCI message to be sent to the optical network terminal device, where the multicast information may include a multicast port identifier and the multicast port identifier is used to reflect a mapping between the OMCI message and the optical network terminal device.

In an embodiment, when a service message and an OMCI message share a multicast channel, the multicast information may further include a message type identifier to distinguish between the service message and the OMCI message. For a GPON system and an XG-PON system, the multicast information can be borne in the OMCI message by extending a GEM frame or an XGEM frame.

For the GPON system, the optical line terminal device may use the GPON encapsulation method (GEM, GPON Encapsulation Method) for encapsulating the OMCI message; that is, the OMCI message is encapsulated in a GEM frame. A structure of the GEM frame in which the OMCI message is encapsulated is shown in Table 1.

**Table 1**

| **Field Name** | **Subfield Name** | **Description** |
|---|---|---|
| GEM frame header (Header) | Payload length identifier (PLI) | 12 bits; indicates the length of the GEM frame |
| | GEM port identifier (GEM Port-ID) | 12 bits; indicates the GEM port that the OMCI message belongs to |
| | Payload type identifier (PTI) | 3 bits; indicates the type of a message fragment |
| | Header error control (HEC) field | 13 bits; performs error detection and correction for the GEM frame header through this field |
| GEM payload (Payload) | OMCI payload | If it is a basic OMCI message, its length is 48 bytes; and if it is an extended OMCI message, its length is not fixed and ranges from 16 bytes to 1980 bytes. |

The optical line terminal device may bear specific content of an OMCI message in the GEM payload of the GEM frame and bear a multicast port identifier in the "GEM port identifier" field in the "GEM frame header". The multicast port identifier may instruct the optical network terminal device whose corresponding multicast port is enabled to receive the OMCI message. In another aspect, the optical line terminal device may further set the "payload type identifier" field in the "GEM frame header" to a message type identifier to indicate whether an OMCI message or a service message is encapsulated in the GEM frame and indicate the type of the OMCI message or the service message. Specifically, GEM supports fragment encapsulation. If the "payload type identifier" is 0x110, it indicates that an OMCI message is being encapsulated in the GEM frame but the current fragment is not the last fragment of the message; and if the "payload type identifier" is 0x111, it indicates that an OMCI message is being encapsulated in the GEM frame and the current fragment is the last fragment of the message. If the "payload type identifier" is 0x000, it indicates that a service message is being encapsulated in the GEM frame but the current fragment is not the last fragment of the message; and if the "payload type identifier" is 0x001, it indicates that a service message is being encapsulated in the GEM frame and the current fragment is the last fragment of the message.

For the XG-PON system, the optical line terminal device may use the XG-PON encapsulation method (XGEM, XG-PON Encapsulation Method) for encapsulating the OMCI message; that is, the OMCI message is encapsulated in an XGEM frame. A structure of the XGEM frame in which the OMCI message is encapsulated is shown in Table 2.

**Table 2**

| **Field Name** | **Subfield Name** | **Description** |
|---|---|---|
| XGEM frame header | Payload length identifier (PLI) | 14 bits; indicates the length of the XGEM frame |
| | Key index (Key Index) | 2 bits; indicates the key index to be selected for encryption |
| | XGEM port identifier (XGEM Port-ID) | Indicates the XGEM port that the OMCI message belongs to |
| | Reserved field (Options) | 18 bits; reserved |
| | Last fragment indicator (Last Fragment) | 1 bit; indicates whether the fragment is the last fragment |
| | Hybrid error correction (HEC) field | Performs error detection and correction for the XGEM header through this field |
| XGEM payload (Payload) | OMCI payload | If it is a basic OMCI message, its length is 48 bytes; and if it is an extended OMCI message, its length is not fixed and ranges from 16 bytes to 1980 bytes. |

The optical line terminal device may bear specific content of an OMCI message in the GEM payload of the GEM frame and bear a multicast port identifier in the "XGEM port identifier" field in the "XGEM frame header". The multicast port identifier may instruct the optical network terminal device whose corresponding multicast port is enabled to receive the OMCI message. In another aspect, the optical line terminal device may also set the "Reserved field" field in the "XGEM frame header" to a message type identifier to indicate whether an OMCI message or a service message is encapsulated in the GEM frame. Specifically, if the "Reserved field" is 0x00001, it indicates an OMCI message; and if the "Reserved field" is 0x00000, it indicates a service message.

S203: The optical line terminal device sends the OMCI message including the multicast information to the optical network terminal device through the multicast channel.

After the multicast information is borne in the OMCI message, the optical line terminal device may send the OMCI message including the multicast information to the optical network terminal device through an optical distribution network. After the OMCI message is transmitted to the optical network terminal device through the multicast channel, the optical network terminal device may learn, according to the multicast information included in the OMCI message, that the OMCI message needs to be received, and obtain the OMCI message from the multicast channel.

In this embodiment, an optical line terminal device establishes a multicast channel and sets multicast information in an OMCI message. In this way, an OMCI message sent by the optical line terminal device can be received by multiple optical network terminal devices simultaneously, thereby significantly reducing a waste of downlink bandwidth resources, and reducing burden of the OLT in copying the OMCI message. Further, light propagates extremely fast, and there is no time delay caused by copying the OMCI message. This improves the real-time performance of the system and reduces a waste of time. In addition, a service message and an OMCI message are encrypted, thereby effectively preventing the service message and the OMCI message from being eavesdropped and ensuring secure message transmission.

Referring to FIG. 3, FIG. 3 is a flowchart of a method for transmitting an OMCI message according to another embodiment of the present application. The method for transmitting an OMCI message includes:
S301: An optical network terminal device receives configuration information sent by an optical line terminal device.

Before sending the configuration information, the optical line terminal device has separately established a unicast channel, similar to a point-to-point channel, between it and each of its corresponding optical network terminal devices. After the optical line terminal device sends the configuration information to the optical network terminal device, the optical network terminal device receives the configuration information through the unicast channel. For specific content of the configuration information, reference may be made to the description in step S201 in the previous embodiment.

S302: The optical network terminal device configures a multicast port on the local node to an enabled status according to the configuration information so as to establish a multicast channel.

After receiving the configuration information, the optical network terminal device configures the multicast port on the local node to an enabled status according to the configuration information so as to establish a multicast channel. When the configuration information received by the optical network terminal device indicates that a multicast channel needs to be established on the local node, the optical network terminal device enables the multicast port on the local node. Otherwise, the multicast port on the local node is disabled. After the optical network terminal device has configured the multicast port on the local node to the enabled status, the multicast channel is formed between the optical line terminal device and the optical network terminal device whose multicast port is enabled.

It should be noted that a multicast channel may be used to multicast a service message and an OMCI message simultaneously or multicast an OMCI message separately, and multicast ports of the optical network terminal devices sharing a multicast channel only receive the service message and the OMCI message that have corresponding multicast port identifiers.

The optical line terminal device may further set a multicast channel so as to encrypt a downlink service message and OMCI message. For example, the optical line terminal device generates an encryption key and sends the key to a designated optical network terminal device through the unicast channel. After receiving the key through the unicast channel, the optical network terminal device is capable of decrypting an encrypted multicast message received through the multicast channel by using the key.

S303: The optical network terminal device acquires, from the multicast channel, the OMCI message including multicast information.

After the multicast port on the local node is configured, the optical line terminal device may provide the OMCI message for the optical network terminal device through the multicast channel, where the OMCI message may carry the multicast information including a multicast port identifier; and the optical network terminal device may learn, according to the multicast information, that the OMCI message needs to be received, and acquire the OMCI message from the multicast channel.

In this embodiment, a multicast channel is established, and multicast information is set in an OMCI message, so that an OMCI message sent by an optical line terminal device can be received by multiple optical network terminal devices simultaneously, thereby significantly reducing a waste of downlink bandwidth resources, and reducing burden of the OLT in copying the OMCI message. Further, light propagates extremely fast, and there is no time delay caused by copying the OMCI message. This improves the real-time performance of the system and reduces a waste of time.

In addition, a service message and an OMCI message are encrypted, thereby effectively preventing the service message and the OMCI message from being eavesdropped and ensuring secure message transmission.

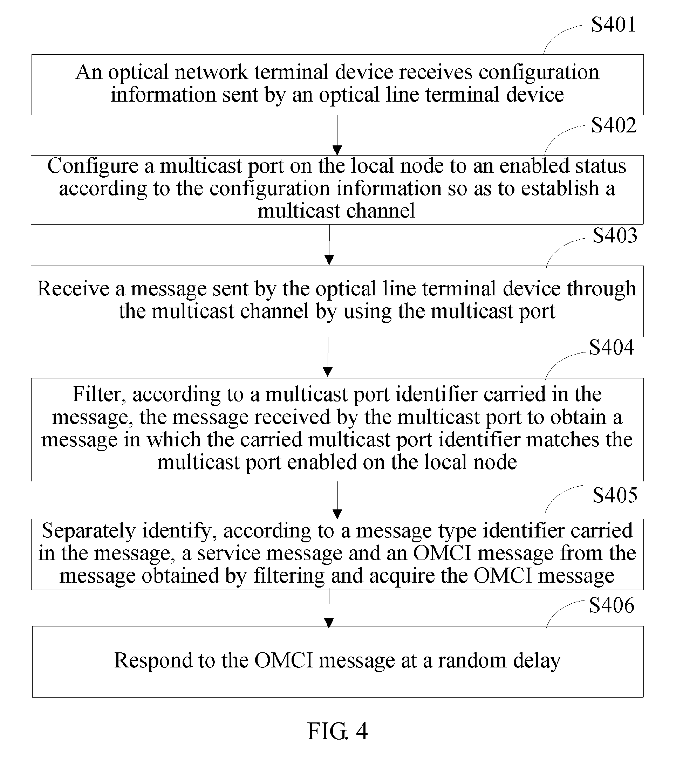

Referring to FIG. 4, FIG. 4 is a flowchart of a method for transmitting an OMCI message according to still another embodiment of the present application. The method for transmitting an OMCI message includes:
S401: An optical network terminal device receives configuration information sent by an optical line terminal device.
S402: The optical network terminal device configures a multicast port on the local node to an enabled status according to the configuration information so as to establish a multicast channel.
Steps S401 and S402 are basically the same as steps S301 and S302 in the previous embodiment. For details, reference may be made to the related descriptions in steps S301 and S302 in the previous embodiment. Details are not repeated herein.
S403: The optical network terminal device receives, by using the multicast port thereof, a message sent by the optical line terminal device through the multicast channel.

The message sent by the optical line terminal device through the multicast channel may include a service message and an OMCI message, or may only include an OMCI message. In addition, the optical line terminal device may encapsulate the message in a GEM frame or an XGEM frame for transmission, and the message may carry multicast information such as a multicast port identifier and a message type identifier. For a specific message format, reference may be made to the descriptions in the previous embodiments.

S404: The optical network terminal device filters, according to the multicast port identifier carried in the message, the message received by the multicast port to obtain a message in which the carried multicast port identifier matches the multicast port enabled on the local node.

After the optical line terminal device transmits the message sent through the multicast channel to the multicast port on the optical network terminal device, the optical network terminal device filters the message by using its multicast port. If the multicast port identifier in the multicast information carried in the message matches the multicast port enabled on the local node, the message is pushed into a stack; otherwise, the message is discarded. In this case, the message obtained by the optical network terminal device may be an OMCI message, or include both an OMCI message and a service message.

S405: The optical network terminal device separately identifies, according to the message type identifier carried in the message, the service message and the OMCI message from the message obtained by filtering and acquires the OMCI message.

In an embodiment, the multicast information sent by the optical line terminal device further includes a message type identifier. When a service message and an OMCI message share a multicast channel, the optical network terminal device further parses the message type identifier carried in the message and separately identifies the service message and the OMCI message according to the message type identifier, thereby obtaining the OMCI message sent by the optical line terminal device.

It should be noted that when OMCI messages exclusively use a multicast channel, a message obtained by filtering of the multicast port is an OMCI message. In this case, there is no need to perform step S405; that is, step S405 is optional.

406: The optical network terminal device responds to the OMCI message at a random delay.

After the optical network terminal device receives the OMCI message, if the optical line terminal device designates the optical network terminal device for responding to the OMCI message, the optical network terminal device responds to the OMCI message at a random delay so as to prevent an impact on the optical line terminal device caused by responses to the OMCI message in a short time by a large number of optical network terminal devices. In addition, when responding to the OMCI message, the optical network terminal device still responds through a unicast channel. In an exemplary embodiment, the delay is 3 seconds at most.

It should be noted that when OMCI messages exclusively use a multicast channel, if one of the optical network terminal devices that share the multicast channel does not receive the OMCI message any longer, the optical line terminal device may resend, through the unicast channel between it and the optical network terminal device, configuration information that is used to instruct the optical network terminal device to disable the multicast port. After receiving the configuration information, the optical network terminal device disables the multicast port on the local node. That is, the multicast port on the local node is disabled.

In this embodiment, the time for responding to an OMCI message is set randomly for an optical network terminal device, so that an impact on an optical line terminal device can be prevented; and if a certain optical network terminal device does not receive the OMCI message any longer, a multicast port on the local node is disabled, so that a multicast channel can be managed flexibly and efficiency of the whole system is improved.

In addition, a service message and an OMCI message are encrypted, thereby effectively preventing the service message and the OMCI message from being eavesdropped and ensuring secure message transmission.

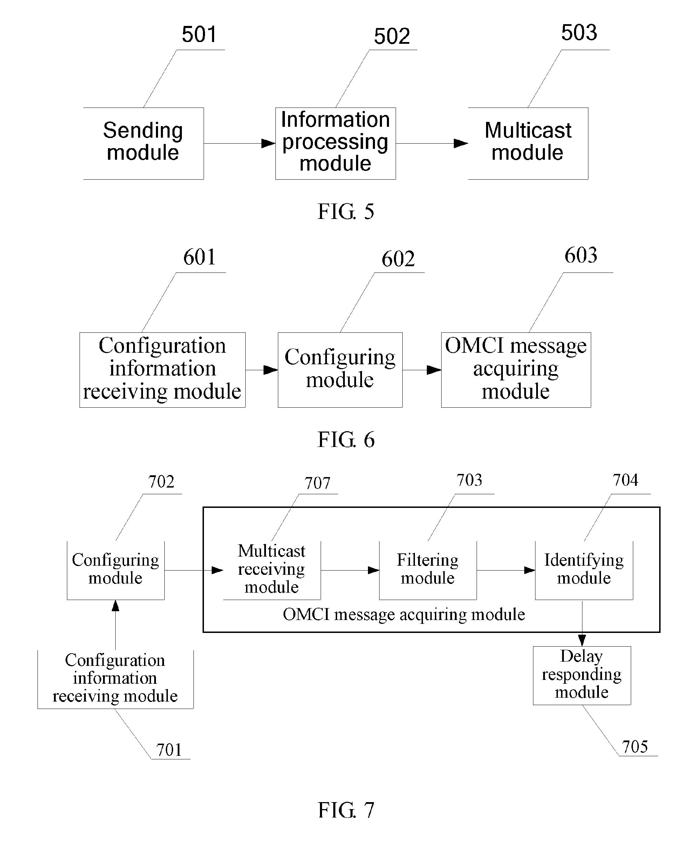

Referring to FIG. 5, FIG. 5 is a schematic structural diagram of an optical line terminal device according to an embodiment of the present application. The optical line terminal device provided in this embodiment includes a sending module 501, an information processing module 502, and a multicast module 503.

The sending module 501 is adapted to send, through a pre-established unicast channel, configuration information that is used to instruct an optical network terminal device to configure a multicast port on the optical network terminal device to an enabled status to.

For example, before sending the configuration information, an optical line terminal device may separately establish a unicast channel, similar to a point-to-point channel, between it and each of its corresponding optical network terminal devices. The sending module 501 may send the configuration information by using the unicast channel to establish a multicast channel to the optical network terminal device. After receiving the configuration information, the optical network terminal device determines, according to content of the configuration information, whether the multicast port on the local node is enabled or the multicast port on the local node is disabled, so that the multicast channel is established between the optical line terminal device and the optical network terminal device.

The information processing module 502 is adapted to bear multicast information in an OMCI message to be sent to the optical network terminal device.

The multicast information includes a multicast port identifier, and the multicast port identifier is used to reflect a mapping between the OMCI message and the multicast port of the optical network terminal device. In addition, when a service message and an OMCI message share a multicast channel, the multicast information may further include a message type identifier that is used to indicate whether a message sent by the optical line terminal device is an OMCI message or a service message and indicate the type of the OMCI message or the service message.

The multicast module 503 is adapted to send the OMCI message including the multicast information to the optical network terminal device through the multicast channel.

In this embodiment, an optical line terminal device establishes a multicast channel and sets multicast information in an OMCI message. In this way, an OMCI message sent by the optical line terminal device can be received by multiple optical network terminal devices simultaneously, thereby significantly reducing a waste of downlink bandwidth resources, and reducing burden of the OLT in copying the OMCI message. Further, light propagates extremely fast, and there is no time delay caused by copying the OMCI message. This improves the real-time performance of the system and reduces a waste of time.

Referring to FIG. 6, FIG. 6 is a schematic structural diagram of an optical network terminal device according to an embodiment of the present application. The optical network terminal device provided in this embodiment includes a configuration information receiving module 601, a configuring module 602, and an OMCI message acquiring module 603.

The configuration information receiving module 601 is adapted to receive, through a pre-established unicast channel, configuration information that is sent by an optical line terminal device and used to instruct an optical network terminal device to configure a multicast port to an enabled status. For example, before sending the configuration information, the optical line terminal device may separately establish a unicast channel, similar to a point-to-point channel, between it and each of its corresponding optical network terminal devices; and the optical line terminal device may send the configuration information to the optical network terminal device through the unicast channel, so that the configuration information receiving module 601 may receive the configuration information through the unicast channel.

The configuring module 602 is adapted to configure a multicast port on the local node to an enabled status according to the configuration information received by the configuration information receiving module 601 so as to establish a multicast channel. For example, the configuring module 602 may determine, according to content of the configuration information, whether the multicast port on the local node is enabled or the multicast port on the local node is disabled, so that a multicast channel that can be used to transmit an OMCI message (or transmit a service message and an OMCI message simultaneously) is formed between the optical line terminal device and the optical network terminal device whose multicast port is enabled.

The OMCI message acquiring module 603 is adapted to acquire an OMCI message including multicast information from the multicast channel, where the multicast information includes a multicast port identifier and the multicast identifier is used to reflect a mapping between the OMCI message and the optical network terminal device. In addition, when a service message and an OMCI message share a multicast channel, the multicast information may further include a message type identifier that is used to indicate whether a message sent by the optical line terminal device is an OMCI message or a service message and indicate the type of the OMCI message or the service message.

In this embodiment, a multicast channel is established, and multicast information is set in an OMCI message, so that an OMCI message sent by an optical line terminal device can be received by multiple optical network terminal devices simultaneously, thereby significantly reducing a waste of downlink bandwidth resources, and reducing burden of the OLT in copying the OMCI message. Further, light propagates extremely fast, and there is no time delay caused by copying the OMCI message. This improves the real-time performance of the system and reduces a waste of time.

Referring to FIG. 7, FIG. 7 is a schematic structural diagram of an optical network terminal device according to another embodiment of the present application. The optical network terminal device provided in this embodiment includes a configuration information receiving module 701, a configuring module 702, a multicast receiving module 707, a filtering module 703, an identifying module 704, and a delay responding module 705.

The configuration information receiving module 701 is adapted to receive, through a pre-established unicast channel, configuration information that is sent by an optical line terminal device and used to instruct an optical network terminal device to configure a multicast port to an enabled status. For example, before sending the configuration information, the optical line terminal device may separately establish a unicast channel, similar to a point-to-point channel, between it and each of its corresponding optical network terminal devices; and the optical line terminal device may send the configuration information to the optical network terminal device through the unicast channel.

The configuring module 702 is adapted to configure a multicast port on the local node to an enabled status according to the configuration information received by the configuration information receiving module 701 so as to establish a multicast channel. For example, the configuring module 702 may determine, according to content of the configuration information, whether the multicast port on the local node is enabled or the multicast port on the local node is disabled, so that a multicast channel that can be used to transmit an OMCI message (or transmit a service message and an OMCI message simultaneously) is formed between the optical line terminal device and the optical network terminal device whose multicast port is enabled, where the OMCI message may carry multicast information such as a multicast port identifier and a message type identifier.

In this embodiment, the multicast receiving module 707, the filtering module 703, and the identifying module 704 may form an OMCI message acquiring module that is adapted to acquire an OMCI message sent by the optical line terminal device through the multicast channel.

Specifically, the multicast receiving module 707 receives, by using a multicast port, a message sent by the optical line terminal device through the multicast channel.

The filtering module 703 is adapted to filter, according to the multicast port identifier carried in the message, the message received by the multicast port to obtain a message in which the carried multicast port identifier matches the multicast port enabled on the local node. When OMCI messages exclusively use a multicast channel, a message obtained by filtering of the multicast port is an OMCI message. Alternatively, when a service message and an OMCI message share a multicast channel, a message obtained by filtering includes both the service message and the OMCI message.

The identifying module 704 is adapted to further separately identify, according to the message type identifier carried in the message, the service message and the OMCI message from the message obtained by filtering of the filtering module 703, thereby obtaining the OMCI message sent by the optical line terminal device. It should be understood that when OMCI messages exclusively use a multicast channel, a message obtained by filtering of the filtering module 703 is an OMCI message. Therefore, further identifying a message is not required. That is, the identifying module 704 is optional.

The delay responding module 705 is adapted to respond to the OMCI message at a random delay. When responding to the OMCI message, the delay module 705 still responds through the unicast channel. In an exemplary implementation manner, the delay is 3 seconds at most.

Optionally, when OMCI messages exclusively use a multicast channel, and if one of the optical network terminal devices that share the multicast channel does not receive an OMCI message any longer, for example, receiving the OMCI message is completed, the optical line terminal device may resend, through the unicast channel between it and the optical network terminal device, configuration information that is used to instruct the optical network terminal device to disable the multicast port. Accordingly, the configuration information receiving module 701 may further be adapted to receive the configuration information, and the configuring module 702 may further disable the multicast port on the local node according to the configuration information.

In this embodiment, the time for responding to an OMCI message is set randomly for an optical network terminal device, so that an impact on an optical line terminal device can be prevented; and if a certain optical network terminal device does not receive the OMCI message any longer, a multicast port on the local node is disabled, so that a multicast channel can be managed flexibly and efficiency of the whole system is improved.

Based on the method and the apparatus for transmitting an OMCI message, an embodiment of the present application also provides a passive optical network system, including an optical line terminal device and multiple optical network terminal devices, where the optical line terminal device is connected to the multiple optical network terminal devices through an optical distribution network. For a detailed network structure of the passive optical network system, reference may be made to FIG. 1 and related descriptions. The optical line terminal device separately pre-establishes a unicast channel, similar to a point-to-point channel, between it and each of its corresponding optical network terminal devices to transmit configuration information.

The optical line terminal device is adapted to send, through the unicast channel, configuration information that is used to instruct the optical network terminal device to configure a multicast port to an enabled status so as to establish a multicast channel to the optical network terminal device; when an OMCI message is required to be delivered to the optical network terminal device, bear multicast information such as a multicast port identifier that is used to identify a mapping between the OMCI message and the multicast port in the OMCI message to be sent to the optical network terminal device; and further send the OMCI message including the multicast information to the optical network terminal device through the multicast channel.

The optical network terminal device is adapted to configure a multicast port on the local node to an enabled status according to the configuration information after receiving the configuration information through the unicast channel so as to establish a multicast channel to the optical line terminal device; and acquire, through the multicast channel, the OMCI message sent by the optical line terminal device.

In an embodiment, when a service message and an OMCI message share a multicast channel, multicast information borne in a message sent by the optical line terminal device may also include a message type identifier. After receiving the message sent by the optical line terminal device, the optical network terminal device may learn, according to the message type identifier, whether the message is an OMCI message or a service message, and learn information such as the type of the OMCI message or the service message.

Optionally, the optical network terminal device may further be adapted to respond to the OMCI message at a random delay after acquiring the OMCI message. In another aspect, when OMCI messages exclusively use a multicast channel, if the optical network terminal device does not need to receive the OMCI message any longer, the optical line terminal device may further be adapted to resend, through the unicast channel between it and the optical network terminal device, configuration information that is used to instruct the optical network terminal device to disable the multicast port so as to instruct the optical network terminal device to disable its multicast port. Accordingly, the optical network terminal device may further be adapted to receive the configuration information that is used to give an instruction in disabling the multicast port, and disable the multicast port on the local node according to the configuration information.

In this embodiment, a multicast channel is established between an optical line terminal device and an optical network terminal device, and multicast information is set in an OMCI message, so that an OMCI message sent by the optical line terminal device can be received by multiple optical network terminal devices simultaneously, thereby significantly reducing a waste of downlink bandwidth resources, and reducing burden of the OLT in copying the OMCI message. Further, light propagates extremely fast, and there is no time delay caused by copying the OMCI message. This improves the real-time performance of the system and reduces a waste of time.

In the several embodiments provided in the present application, it should be understood that the disclosed system, apparatus, and method may be implemented in other manners. For example, the described apparatus embodiment is merely exemplary. For example, the division of the modules or units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical or other forms.

The units described as separate parts may or may not be physically separate, and parts displayed as units may or may not be physical units, that is, may be located in one position, or may be distributed on multiple network units. A part or all of the units may be selected according to actual needs to achieve the objectives of the solutions of the embodiments.

In addition, functional units in the embodiments of the present application may be integrated into one processing unit, or each of the units may exist alone physically, or two or more units are integrated into one unit. The integrated unit may be implemented in the form of hardware, or may be implemented in the form of a software functional unit.

When the integrated unit are implemented in the form of a software functional unit and sold or used as an independent product, the integrated unit may be stored in a computer-readable storage medium. Based on such an understanding, the technical solutions of the present application essentially, or the part contributing to the prior art, or all or a part of the technical solutions may be implemented in the form of a software product. The computer software product is stored in a storage medium and includes several instructions for instructing a computer device (which may be a personal computer, a server, or a network device) or a processor (processor) to perform all or a part of the steps of the methods described in the embodiments of the present application. The storage medium includes: any medium that can store program codes, such as a USB flash disk, a removable hard disk, a read-only memory (ROM, Read-Only Memory), a random access memory (RAM, Random Access Memory), a magnetic disk, or an optical disk.

It should be noted that the foregoing embodiments are merely intended for describing the technical solutions of the present application rather than limiting the present application. Although the present application is described in detail with reference to the foregoing embodiments, persons of ordinary skill in the art should understand that they may still make modifications to the technical solutions described in the embodiments, or make equivalent replacements to some technical features thereof, as long as such modifications or replacements do not cause the essence of corresponding technical solutions to depart from the spirit and scope of the technical solutions of the embodiments of the present application.

## Claims

1. A method for transmitting an optical network terminal management and interface OMCI message, comprising:
sending, by an optical line terminal device, configuration information to an optical network terminal device, wherein the configuration information is used to instruct the optical network terminal device to configure a multicast port on the local node to an enabled status so as to establish a multicast channel; and
sending an OMCI message that carries multicast information to the optical network terminal device through the multicast channel, wherein the multicast information comprises a multicast port identifier and the multicast port identifier is used to reflect a mapping between the OMCI message and the multicast port.

2. The method according to claim 1, wherein the OMCI message and a service message share the multicast channel, the multicast information further comprises a message type identifier, and the message type identifier is used to indicate whether a message sent by the optical line terminal device through the multicast channel is an OMCI message or a service message.

3. The method according to claim 2, wherein the OMCI message is encapsulated in a GEM frame, the GEM frame comprises a frame header and a payload, the frame header comprises a GEM port identifier field and a payload type identifier field, the GEM port identifier field is used to bear the multicast port identifier carried in the OMCI message, the payload type identifier field is used to bear the message type identifier carried in the OMCI message, and the payload of the GEM frame is used to bear content of the OMCI message.

4. The method according to claim 2, wherein the OMCI message is encapsulated in an XGEM frame, the XGEM frame comprises an XGEM port identifier field and a reserved field, the XGEM port identifier field is used to bear the multicast port identifier carried in the OMCI message, and the reserved field is used to bear the message type identifier carried in the OMCI message.

5. The method according to any one of claims 1 to 4, wherein the configuration information is transmitted to the optical network terminal device through a pre-established unicast channel between the optical line terminal device and the optical network terminal device.

6. A method for transmitting an optical network terminal management and interface OMCI message, comprising:
receiving, by an optical network terminal device, configuration information sent by an optical line terminal device;
configuring a multicast port on the local node to an enabled status according to the configuration information so as to establish a multicast channel; and
acquiring, from the multicast channel, an OMCI message that is sent by the optical line terminal device and carries multicast information, wherein the multicast information comprises a multicast port identifier and the multicast port identifier is used to reflect a mapping between the OMCI message and the multicast port.

7. The method according to claim 6, wherein when the OMCI message and a service message share the multicast channel, the multicast information further comprises a message type identifier and the message type identifier is used to indicate whether a message sent by the optical line terminal device through the multicast channel is an OMCI message or a service message.

8. The method according to claim 7, wherein the acquiring, from the multicast channel, an OMCI message that is sent by the optical line terminal device and carries multicast information comprises:
receiving, by the optical network terminal device, by using the multicast port thereof, a message sent by the optical line terminal device through the multicast channel;
filtering, according to the multicast port identifier carried in the message, the message received by the multicast port to obtain a message in which the carried multicast port identifier matches the multicast port enabled on the local node; and
separately identifying, according to a message type identifier carried in the message, a service message and an OMCI message from the message obtained by filtering and acquiring the OMCI message.

9. The method according to claim 6, further comprising:
responding to the OMCI message at a random delay according to a designation of the optical line terminal device after acquiring the OMCI message.

10. The method according to claim 9, wherein the OMCI messages exclusively use the multicast channel, and the method further comprises disabling the multicast port according to an instruction of the optical line terminal device if the optical network terminal device does not receive an OMCI message any longer.

11. An optical line terminal device, comprising:
a sending module, adapted to send configuration information to an optical network terminal device, wherein the configuration information is used to instruct the optical network terminal device to configure a multicast port on the local node to an enabled status so as to establish a multicast channel;
an information processing module, adapted to bear multicast information in an OMCI message, wherein the multicast information comprises a multicast port identifier and the multicast port identifier is used to reflect a mapping between the OMCI message and the multicast port; and
a multicast module, adapted to send the OMCI message comprising the multicast information to the optical network terminal device through the multicast channel.

12. The device according to claim 11, wherein the OMCI message and a service message share the multicast channel, the multicast information further comprises a message type identifier, and the message type identifier is used to indicate whether a message sent by the optical line terminal device through the multicast channel is an OMCI message or a service message.

13. The device according to claim 12, wherein the OMCI message is encapsulated in a GEM frame, the GEM frame comprises a frame header and a payload, the frame header comprises a GEM port identifier field and a payload type identifier field, the GEM port identifier field is used to bear the multicast port identifier carried in the OMCI message, the payload type identifier field is used to bear the message type identifier carried in the OMCI message, and the payload of the GEM frame is used to bear content of the OMCI message.

14. The device according to claim 12, wherein the OMCI message is encapsulated in an XGEM frame, the XGEM frame comprises an XGEM port identifier field and a reserved field, the XGEM port identifier field is used to bear the multicast port identifier carried in the OMCI message, and the reserved field is used to bear the message type identifier carried in the OMCI message.

15. An optical network terminal device, comprising:
a configuration information receiving module, adapted to receive configuration information sent by an optical line terminal device;
a configuring module, adapted to configure a multicast port on the local node to an enabled status according to the configuration information so as to establish a multicast channel; and
an OMCI message acquiring module, adapted to acquire, from the multicast channel, an OMCI message that is sent by the optical line terminal device and carries multicast information, wherein the multicast information comprises a multicast port identifier and the multicast port identifier is used to reflect a mapping between the OMCI message and the multicast port.

16. The device according to claim 15, wherein the OMCI message and a service message share the multicast channel, the multicast information further comprises a message type identifier, and the message type identifier is used to indicate whether a message sent by the optical line terminal device through the multicast channel is an OMCI message or a service message.

17. The device according to claim 16, wherein the OMCI message acquiring module comprises:
a multicast receiving module, adapted to receive, by using a multicast port, a message sent by the optical line terminal device through the multicast channel;
a filtering module, adapted to filter, according to the multicast port identifier carried in the message, the message received by the multicast port to obtain a message in which the carried multicast port identifier matches the multicast port enabled on the local node; and
an identifying module, adapted to identify, according to the message type identifier carried in the message, a service message and an OMCI message from the message obtained by filtering and acquiring the OMCI message.

18. The device according to claim 17, further comprising:
a delay responding module, adapted to respond to, after acquiring the OMCI message, the OMCI message at a random delay according to a designation of the optical line terminal device.

19. A passive optical network system, comprising an optical line terminal device and multiple optical network terminal devices, wherein the optical line terminal device is connected to the multiple optical network terminal devices through an optical distribution network, and the optical line terminal device is the optical line terminal device according to any one of claims 11 to 14.

20. The system according to claim 19, wherein the optical network terminal device is the optical network terminal device according to any one of claims 15 to 18.
